# FASCICULE DE BREVET EUROPEEN

(11) **EP 0 603 050 B1**
(45) Date de publication et mention de la délivrance du brevet: **01.04.1998**
(21) Numéro de dépôt: 93403006.5
(22) Date de dépôt: 13.12.1993
(51) Int. Cl.: H04Q 7/20, H04B 1/16

(54) **Dispositif de recherche d'une connexion entre un terminal et un système de radiocommunication**
Einrichtung zur Verbindungssuche zwischen Endgerät und Funkkommunikationssystem
Arrangement for connection search between terminal and radio-communication system

(30) Priorité: 16.12.1992 FR 9215202
(43) Date de publication de la demande: 22.06.1994
(73) Titulaire: ALCATEL ALSTHOM COMPAGNIE GENERALE D'ELECTRICITE, 75008 Paris (FR)
(72) Inventeur: Pinault, Francis, F-92270 Bois Colombes (FR); Jouin, Christophe, F-92270 Bois Colombes (FR)
(74) Mandataire: Pothet, Jean Rémy Emile Ludovic

(56) Documents cités:
- EP-A- 0 490 441
- US-A- 4 908 523

## Description

La présente invention concerne un dispositif de recherche d'une connexion entre un terminal et un système de radiocommunication.

Dans les systèmes de radiocommunication, le système paneuropéen cellulaire numérique de radiocommunication connu sous le nom de système GSM par exemple, les communications transitent entre un terminal et une station de base par des canaux de communication véhiculant des signaux radio. De tels systèmes comprennent une pluralité de canaux prévus soit pour l'émission des terminaux à destination des stations de base, soit pour l'émission des stations de base à destination des terminaux.

Parmi ces derniers canaux, figure un canal de contrôle émis en permanence qui permet à un terminal d'accéder au système par la station de base qui émet ce canal afin de pouvoir établir des communications. Le terminal doit donc identifier ce canal de contrôle pour acquérir les informations qui lui permettent de se déclarer dans le système. Parmi ces informations on trouve notamment des informations de synchronisation, c'est pourquoi il est habituel de parler de procédure de synchronisation.

La solution généralement adoptée pour la synchronisation se déroule en deux étapes. Dans un premier temps le terminal mesure la puissance de tous les canaux affectés à la réception. Ensuite, le terminal essaie de se synchroniser sur le canal reçu avec la plus forte puissance et s'il n'y parvient pas, il essaie sur les autres canaux en les prenant par ordre de puissance à la réception décroissante jusqu'à ce qu'il puisse effectivement se synchroniser. Cette solution est d'ailleurs celle qui figure dans les recommandations 4.08 version 3.11.0 et 5.08 version 3.7.0 du GSM.

La procédure de synchronisation est engagée systématiquement lorsque le terminal est mis en marche mais aussi, de manière plus générale, à la suite d'une perte de synchronisation, c'est-à-dire lorsque la liaison radio acheminée notamment par le canal de contrôle entre la station de base et le terminal a été interrompue. Cette interruption peut être volontaire, il s'agit par exemple de l'arrêt du terminal, mais elle peut également être involontaire. En effet, il peut arriver que le terminal soit provisoirement dans l'impossibilité de se synchroniser car les conditions de réception radio ne sont pas satisfaisantes. C'est par exemple le cas lorsqu'il est dans un tunnel ou plus généralement lorsqu'il se trouve dans une zone d'ombre au sens radio du terme.

Cette procédure de synchronisation qui s'applique dans le cas le plus général présente un intérêt particulier lorsque le système de radiocommunication se décompose en plusieurs réseaux radio généralement gérés par des opérateurs distincts, chaque réseau couvrant un territoire correspondant à la totalité ou bien à une ou plusieurs régions d'un pays. Ces réseaux radio sont par ailleurs reliés aux réseaux câblés des pays correspondants de sorte qu'un terminal du système de radiocommunication, puisse communiquer avec un terminal d'un réseau câblé.

De plus, plusieurs réseaux radio peuvent coexister dans un même pays, les zones de couverture de ces réseaux pouvant se superposer partiellement ou en totalité. Ainsi, lorsqu'un terminal veut accéder au système de radiocommunication, la question se pose de savoir à quel réseau radio il va se connecter car il y a un choix possible. A cet effet le terminal dispose d'un dispositif de recherche de connexion pour établir la liste des réseaux radio sur lesquels il pourrait se connecter.

Par ailleurs un terminal particulier qui peut fonctionner dans tout le système de radiocommunication est affilié à un réseau radio particulier, le réseau de rattachement, tout comme un terminal téléphonique est affilié à un réseau câblé particulier. La raison en est qu'un terminal est le moyen d'obtenir des services tels que communication de parole ou de données, ces services étant assurés par l'opérateur du réseau qui doit connaître l'identité du terminal ne serait-ce que pour facturer les services rendus.

Il est souhaitable qu'un terminal se connecte en priorité sur son réseau de rattachement. En effet, le détenteur du terminal a souscrit un contrat avec un opérateur qui lui fournit certains services qu'un autre opérateur n'est pas nécessairement à même de lui fournir; on prendra pour exemple les cas de la transmission de données. En outre, lorsqu'un terminal se connecte sur un réseau radio que l'on nommera réseau visiteur et qui est distinct de son réseau de rattachement, cela suppose que les deux opérateurs concernés aient conclu un accord autorisant cette connexion. Ce n'est pas toujours le cas et en supposant que ce le soit, il va falloir procéder à un échange d'informations entre les deux réseaux pour gérer les communications du terminal. On pense en premier lieu au prix du service rendu sur le réseau visiteur qui doit être transmis au réseau de rattachement du terminal afin de facturer le détenteur de ce dernier en conséquence.

Il est donc connu que le dispositif de recherche de connexion d'un terminal soit activé régulièrement suite à une action manuelle de son détenteur ou bien de manière automatique lorsque ce terminal est connecté à un réseau visiteur du même pays que son réseau de rattachement, de sorte qu'il rompe la connexion avec le réseau visiteur pour en établir une nouvelle avec le réseau de rattachement. Cette procédure est décrite dans la recommandation 03.22 version 4.0.0 du GSM.

Or, un tel disositif de recherche de connexion fait également appel à la procédure de synchronisation précédemment définie car avant d'établir si l'on peut se connecter sur un réseau, il faut avoir acquis la synchronisation sur un canal de contrôle émis par ce réseau.

Ainsi, en généralisant, le dispositif de recherche de connexion est impératif, que le terminal ait le choix ou n'ait pas le choix du réseau sur lequel il pourrait se connecter. En effet, ce dispositif comprend au minimum un organe de synchronisation pour mettre en oeuvre la procédure de synchronisation.

L'organe de synchronisation est généralement commandé par un organe de temporisation. Durant une période initiale de durée fixée, l'organe de temporisation commande l'organe de synchronisation en permanence jusqu'à ce que la synchronisation soit obtenue sur un canal de contrôle au moins. Si la synchronisation n'est pas acquise à l'issue de cette période initiale, l'organe de temporisation cesse alors de commander l'organe de synchronisation durant une première période d'attente avant de le commander pour une nouvelle tentative. Si à l'issue de cette première période d'attente la synchronisation n'est toujours pas acquise, l'organe de temporisation déclenche alors une deuxième période d'attente suite à laquelle une autre tentative est à nouveau effectuée. L'organe de temporisation procède ainsi à la commande périodique de l'organe de synchronisation, les périodes d'attentes successives séparant les différentes tentatives de synchronisation présentant la même durée. Cette solution est celle qui est adoptée par le GSM dans le cas particulier de la recherche de réseau de rattachement, ceci dans la recommandation 02.11 version 4.2.0.

Le dispositif de recherche de connexion consomme naturellement de l'énergie tant que la synchronisation n'est pas acquise, ce qui pénalise l'autonomie d'un terminal pourvu d'un accumulateur d'énergie de capacité limitée.

Cela étant, la demande de brevet européen EP 0 490 441 enseigne un dispositif de recherche de connexion dans lequel l'organe de temporisation comprend des moyens pour fixer la durée de la deuxième période d'attente pour qu'elle soit supérieure à celle de la première période d'attente.

Ainsi, au fur et à mesure que le temps passe, les périodes d'attente s'allongent, ce qui a bien pour effet de réduire la consommation d'énergie. Cependant, l'allongement des périodes d'attente tend naturellement à retarder la synchronisation du terminal, ce qui n'est pas souhaitable du point de vue de l'utilisateur de ce terminal.

La présente invention a ainsi pour but de définir un compromis entre la réduction de consommation et la disponibilité d'utilisation du terminal.

Ce but est atteint en réalisant un dispositif comprenant un organe de synchronisation pour établir en réponse à un signal de commande si la connexion est réalisable et un organe de temporisation pour produire, suite à une période initiale, ce signal de commande après une première période d'attente, cet organe de temporisation produisant à nouveau le signal de commande après une deuxième période d'attente s'il est établi que la connexion n'est pas réalisable suite à la première période d'attente, l'organe de temporisation comprenant de plus des moyens pour fixer la durée de la deuxième période d'attente pour qu'elle soit supérieure à celle de la première période d'attente, ce dispositif étant agencé dans un terminal pourvu d'un accumulateur d'énergie dont la capacité est représentée par un indicateur de capacité, cet organe de temporisation comprenant de plus des moyens pour fixer l'une au moins de ces périodes d'attente en fonction de l'indicateur de capacité.

Ainsi, on prend en compte une caractéristique essentielle du terminal pour optimiser la recherche de connexion.

De plus, l'organe de temporisation produit le signal de commande en permanence durant la période initiale.

Il est en effet préferable de procéder à plusieurs tentatives de synchronisation successives au début de la recherche de connexion.

En outre, l'organe de temporisation comprend des moyens pour limiter ces périodes d'attente à une période maximale prédéterminée.

Sans cette précaution, les périodes d'attente pourraient devenir extrêmement longues, ce qui aurait pour conséquence d'empêcher le terminal d'accéder au système de radiocommunication.

De manière avantageuse, l'organe de temporisation comprend des moyens pour fixer cette période maximale en fonction de l'indicateur de capacité.

Selon un mode de réalisation particulier du dispositif, l'organe de temporisation calcule la durée de la deuxième période d'attente en multipliant celle de la première période d'attente par un coefficient prédéterminé.

Dès lors, on peut prévoir que l'organe de temporisation fixe ce coefficient prédéterminé en fonction de l'indicateur de capacité.

Selon une caractéristique additionnelle du dispositif, l'organe de synchronisation effectuant un nombre prédéterminé de campagnes de mesures de puissance sur la totalité des canaux émis par le système de radiocommunication, l'organe de temporisation fixe ce nombre de campagnes en fonction de l'indicateur de capacité.

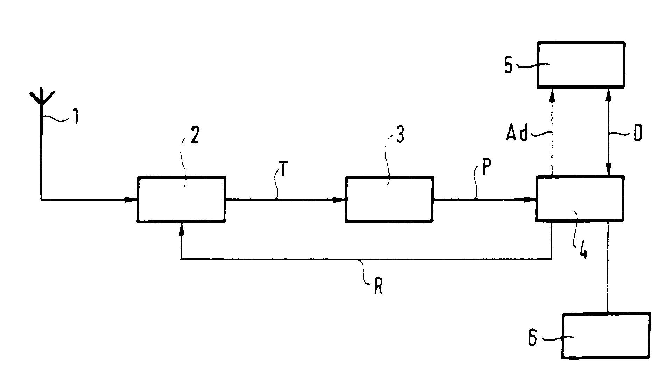

L'invention apparaîtra maintenant de manière plus précise dans le cadre d'un exemple de réalisation donné à titre indicatif en se référant à la figure annexée qui représente les principaux éléments d'un terminal nécessaires à la mise en oeuvre de l'invention.

Dans l'exemple de réalisation adopté, l'organe de synchronisation utilise certains éléments d'un terminal pour remplir sa fonction, ces éléments pouvant être utilisés par ailleurs à d'autres fins. Il s'agit là d'un mode d'agencement courant. On comprendra donc que cet organe soit représenté aux moyens de ces éléments pour satisfaire à la clarté de l'exposé.

En effet, le terminal, de manière connue, comprend essentiellement une antenne 1 prévue pour la réception de différents canaux, un circuit de réception 2 tel qu'un synthétiseur de fréquence raccordé à l'antenne 1 qui sélectionne parmi ces canaux un canal d'accord T en réponse à un signal de réglage R, un circuit de mesure de puissance 3 qui produit un signal de puissance P représentant la puissance du canal d'accord T, et un circuit de contrôle 4 tel qu'un microprocesseur qui produit le signal de réglage R, qui reçoit le signal de puissance P pour l'enregistrer dans une mémoire de travail 5 au moyen d'un signal de données D à une adresse affectée au canal d'accord T, ceci au moyen d'un signal d'adresse Ad.

De manière connue également, le circuit de contrôle 4 a accès à l'identité de tous les canaux que peut recevoir le terminal. A titre d'exemple, il peut s'agir d'une mémoire de canaux 6 associant pour chacun de ces canaux une valeur de consigne du signal de réglage R à une adresse de la mémoire de travail 5. Ainsi, dans une campagne de mesure, le circuit de contrôle 4 produit le signal de réglage R ayant l'une des valeurs de consigne et enregistre dans la mémoire de travail 5 la valeur du signal de puissance P à l'adresse associée à cette valeur de consigne dans la mémoire de canaux 6. Le circuit de contrôle répète cette opération pour toutes les valeurs de consignes de sorte que la mémoire de travail 5 comprenne une valeur de puissance pour chacun des canaux.

On peut naturellement prévoir qu'il y ait plusieurs campagnes de mesures, la valeur de puissance enregistrée dans la mémoire de travail 5 représentant alors la valeur moyenne du signal de puissance obtenu lors des différentes campagnes. Il s'agit là d'une opération banale pour l'homme du métier, elle ne sera donc pas détaillée.

La suite de la procédure de synchronisation qui ne fait pas l'objet de la présente invention ne sera pas décrite ici. Il existe en effet de nombreuses solutions connues au nombre desquelles figure celle exposée dans les recommandations du GSM précitées.

Il en va de même en ce qui concerne la recherche de connexion proprement dite.

L'organe de synchronisation est commandé par un organe de temporisation qui peut lui aussi utiliser un ou plusieurs éléments du terminal, notamment le circuit de contrôle 4. Ce dernier organe ne sera donc pas représenté indépendamment.

Il est ainsi connu que l'organe de temporisation commande en permanence durant une période initiale PI l'organe de synchronisation au moyen d'un signal de commande jusqu'à ce que la synchronisation soit acquise. Si à l'issue de cette période initiale la synchronisation n'est pas obtenue, l'organe de synchronisation communique cette information à l'organe de temporisation qui, dans une procédure de routine, produit à nouveau le signal de commande après une période d'attente de sorte que l'organe de synchronisation effectue un nombre C de campagne de mesures de puissance. Si la synchronisation n'est toujours pas obtenue, la procédure est répétée de manière identique.

Par ailleurs, l'organe de temporisation comprend des moyens pour rallonger progressivement les périodes d'attente successives, afin d'espacer les périodes d'activation de l'organe de synchronisation.

Un moyen simple consiste à initialiser la période d'attente à une durée WO déterminée. Lorsque l'organe de synchronisation signale que la synchronisation n'a pas été obtenue, l'organe de temporisation, multiplie la période d'attente par un coefficient K prédéterminé. Ainsi la nième période d'attente aura une durée égale à celle de la première multipliée par Kⁿ⁻¹. Afin d'éviter que la période d'attente présente une durée excessive, le circuit de temporisation limite la période d'attente à une valeur maximale prédéterminée.

De plus, l'invention prend en compte le fait que les terminaux ne disposent pas tous de la même autonomie. On peut ainsi distinguer les terminaux mobiles qui fonctionnent sur l'accumulateur d'énergie d'un véhicule, les terminaux portables qui possèdent leur propre accumulateur d'une capacité plus limitée et les terminaux portatifs, d'encombrement réduit, qui possèdent également leur propre accumulateur mais d'une capacité encore plus limitée.

L'organe de temporisation dispose d'une information que l'on dénommera indicateur de capacité qui reflète la capacité du terminal. Il dispose également d'une table où figure la période initiale PI, la période d'attente initiale WO, le nombre de campagnes de mesures de puissance à effectuer C , et la valeur maximale WMAX de la période d'attente pour l'indicateur de capacité concerné. Idéalement, cette table contiendra des valeurs précédentes pour toutes les valeurs possibles de l'indice de capacité. Ainsi l'organe de temporisation sera le même quelque soit le terminal et sélectionnera dans la table les valeurs qui correspondent à l'indicateur de capacité du terminal dans lequel il est agencé.

A tire d' exemple numérique, il est possible d'adopter les valeurs suivantes :
- pour un terminal mobile :
   . période initiale PI : 60 minutes
   . période d'attente initiale W0 : 6 minutes
   . nombre de campagnes de mesures C : 3
   . valeur maximale de la période d'attente WMAX : 15 minutes
- pour un terminal portable :
   . période initiale PI : 15 minutes
   . période d'attente initiale W0 : 6 minutes
   . nombre de campagnes de mesures C : 3
   . valeur maximale de la période d'attente WMAX : 15 minutes
- pour un terminal portatif :
   . période initiale PI : 5 minutes
   . période d'attente initiale W0 : 1 minute
   . nombre de campagnes de mesures C : 1
   . valeur maximale de la période d'attente WMAX : 10 minutes

La période initiale a été présentée comme une période de fonctionnement ininterrompue de l'organe de synchronisation. L'invention s'applique également si cette période représente la durée nécessaire à l'accomplissement d'un nombre quelconque de campagnes de mesures. Elle s'applique encore si la durée de cette période initiale est nulle.

## Revendications

1. Dispositif de recherche d'une connexion entre un terminal et un système de radiocommunication comprenant un organe de synchronisation pour établir en réponse à un signal de commande si ladite connexion est réalisable et un organe de temporisation pour produire, suite à une période initiale, ledit signal de commande après une première période d'attente, ledit organe de temporisation produisant à nouveau ledit signal de commande après une deuxième période d'attente s'il est établi que ladite connexion n'est pas réalisable suite à ladite première période d'attente, ledit organe de temporisation comprenant de plus des moyens pour fixer la durée de ladite deuxième période d'attente pour qu'elle soit supérieure à celle de ladite première période d'attente, dispositif caractérisé en ce que, agencé dans un terminal pourvu d'un accumulateur d'énergie dont la capacité est représentée par un indicateur de capacité, ledit organe de temporisation comprend des moyens pour fixer l'une au moins desdites périodes d'attente en fonction dudit indicateur de capacité.

2. Dispositif selon la revendication 1, caractérisé en ce que ledit organe de temporisation produit ledit signal de commande en permanence durant ladite période initiale.

3. Dispositif selon l'une quelconque des revendications 1 ou 2, caractérisé en ce que ledit organe de temporisation comprend de plus des moyens pour limiter lesdites périodes d'attente à une période maximale prédéterminée.

4. Dispositif selon la revendication 3, caractérisé en ce que ledit organe de temporisation comprend des moyens pour fixer ladite période maximale en fonction dudit indicateur de capacité.

5. Dispositif selon l'une quelconque des revendications 1 à 4, caractérisé en ce que ledit organe de temporisation calcule la durée de ladite deuxième période d'attente en multipliant celle de ladite première période d'attente par un coefficient prédéterminé.

6. Dispositif selon la revendication 5, caractérisé en ce que ledit organe de temporisation fixe ledit coefficient prédéterminé en fonction dudit indicateur de capacité.

7. Dispositif selon l'une quelconques des revendications précédentes caractérisé en ce que, ledit organe de synchronisation effectuant un nombre prédéterminé de campagnes de mesures de puissance sur la totalité des canaux émis par ledit système de radio-communication, ledit organe de temporisation fixe ledit nombre de campagnes en fonction dudit indicateur de capacité.

## Patentansprüche

1. Vorrichtung zur Verbindungssuche zwischen einem Endgerät und einem Funkkommunikationssystem mit einem Synchronisationsorgan zum Feststellen, in Reaktion auf ein Steuersignal, ob die Verbindung realisierbar ist, und einem Zeitsteuerorgan zum Erzeugen, nach einem Anfangszeitraum, des Steuersignals nach einem ersten Wartezeitraum, wobei das Zeitsteuerorgan das Steuersignal nach einem zweiten Wartezeitraum von neuem erzeugt, wenn festgestellt ist, daß die Verbindung nach dem ersten Wartezeitraum nicht realisierbar ist, wobei das Zeitsteuerorgan ferner Mittel zum Festlegen der Dauer des zweiten Wartezeitraumes derart, daß sie größer als die des ersten Wartezeitraumes ist, umfaßt, wobei die Vorrichtung **dadurch gekennzeichnet** ist, daß sie das Zeitsteuerorgan, angeordnet in einem Endgerät, das mit einem Energieakkumulator versehen ist, dessen Kapazität durch einen Kapazitätsindikator dargestellt ist, und Mittel zum Festlegen wenigstens eines der Wartezeiträume in Funktion des Kapazitätsindikators umfaßt.

2. Vorrichtung nach Anspruch 1, dadurch gekennzeichnet, daß das Zeitsteuerorgan das Steuersignal während des Anfangszeitraumes ständig erzeugt.

3. Vorrichtung nach einem der Ansprüche 1 oder 2, dadurch gekennzeichnet, daß das Zeitsteuerorgan ferner Mittel zum Begrenzen der Wartezeiträume auf einen vorgegebenen Maximalzeitraum umfaßt.

4. Vorrichtung nach Anspruch 3, dadurch gekennzeichnet, daß das Zeitsteuerorgan Mittel zum Festlegen des maximalen Zeitraumes in Funktion des Kapazitätsindikators umfaßt.

5. Vorrichtung nach einem der Ansprüche 1 bis 4, dadurch gekennzeichnet, daß das Zeitsteuerorgan die Dauer des zweiten Wartezeitraumes durch Multiplizieren derjenigen des ersten Wartezeitraumes mit einem vorgegebenen Koeffizienten berechnet.

6. Vorrichtung nach Anspruch 5, dadurch gekennzeichnet, daß das Zeitsteuerorgan den vorgegebenen Koeffizienten in Funktion des Kapazitätsindikators festlegt.

7. Vorrichtung nach einem der vorhergehenden Ansprüche, dadurch gekennzeichnet, daß das Synchronisationsorgan eine vorgegebene Anzahl von Leistungsmeßreihen auf der Gesamtheit der von dem Funkkommunikationssystem ausgesendeten Kanäle durchführt, wobei das Zeitsteuerorgan die Anzahl der Meßreihen in Funktion des Kapazitätsindikators festlegt.

## Claims

1. Apparatus for searching for a connection between a terminal and a radiocommunications system, the apparatus including a synchronization member for responding to a control signal by establishing whether said connection is feasible, and a time-delay member for producing said control signal after an initial period and after a first waiting period, said time-delay member producing said control signal again after a second waiting period if it is established that said connection is not feasible after said first waiting period, said time-delay member further including means for setting the duration of said second waiting period so that it is greater than said first waiting period, said apparatus being characterized in that, when it is disposed in a terminal provided with a rechargeable battery whose capacity is shown by a capacity indicator, said time-delay member includes means for setting at least one of said waiting periods as a function of said capacity indicator.

2. Apparatus according to claim 1, characterized in that said time-delay member produces said control signal continuously during said initial period.

3. Apparatus according to claim 1 or 2, characterized in that said time-delay member further includes means for limiting said waiting periods to a predetermined maximum period.

4. Apparatus according to claim 3, characterized in that said time-delay member includes means for setting said maximum period as a function of said capacity indicator.

5. Apparatus according to any one of claims 1 to 4, characterized in that said time-delay member calculates the duration of said second waiting period by multiplying the duration of said first waiting period by a predetermined coefficient.

6. Apparatus according to claim 5, characterized in that said time-delay member sets said predetermined coefficient as a function of said capacity indicator.

7. Apparatus according to any preceding claim, characterized in that, with said synchronization member performing a predetermined number of power measurement campaigns on all of the channels transmitted by said radiocommunications system, said time-delay member sets the number of campaigns as a function of said capacity indicator.
